# EUROPÄISCHE PATENTANMELDUNG

(11) **EP 1 000 650 A1**
(43) Veröffentlichungstag der Anmeldung: **17.05.2000**
(21) Anmeldenummer: 99121719.1
(22) Anmeldetag: 03.11.1999
(51) Int. Cl.: B01D 39/14, B01D 46/42

(54) **Filter für gasförmige Medien**

(30) Priorität: 13.11.1998 DE 19852386
(71) Anmelder: Firma Carl Freudenberg, 69469 Weinheim (DE)
(72) Erfinder: Jörder, Kurt, 69469 Weinheim-Heiligkreuz (DE); Veeser, Klaus, Dr., 69469 Weinheim (DE); Pudleiner, Mathias, 69469 Weinheim (DE); Dantz, Dirk, Dr., 69469 Weinheim (DE)

(57) **Zusammenfassung**

Filter aus Vliesstoff, Papier oder dergleichen für gasförmige Medien mit einer elektrisch leitfähigen Schicht aus einer leitfähigen Substanz aus pulverisierbaren Materialien, insbesondere aus elektrisch leitfähigen Ruß- und/oder pulverförmigen Metallpartikeln oder anderen pulverisierten Materialien, wobei die Ruß- oder Metallpartikel mit Hilfe von Bindemitteln auf den Filterfasern fixiert sind und bei dem die leitfähige Schicht netzartig auf der Filterschicht aufgebracht ist.

## Beschreibung

### Technisches Gebiet

Die Erfindung befaßt sich mit Filtern aus Vliesstoff, Papier oder dergleichen für gasförmige Medien mit einer elektrisch leitfähigen Schicht aus einer leitfähigen Substanz aus pulverisierbaren Materialien.

### Stand der Technik

Die Verwendung von Filtern zur Entstaubung von gasförmigen Medien ist allgemein weit verbreitet. So werden Oberflächenfilter in verschiedenen Aufmachungen, z. B. als Schlauchfilter, Filterpatronen oder Filterplatten, eingesetzt. Die Filterschicht wird sehr häufig aus Vliesstoff oder Papier gebildet. Die Wirksamkeit eines solchen Filters wird durch den an der Rohluftseite entstehenden Staubkuchen beeinflußt. Mit zunehmendem Staubkuchen an der Oberfläche des Filters wird eine höhere Abscheidung von Staub erreicht. Gleichzeitig wird jedoch die Luftdurchlässigkeit des Filters verringert, und die Druckdifferenz des Filters steigt an. Bei Überschreiten eines vorbestimmten Grenzwertes bei der Druckdifferenz ist eine Reinigung der Filterschicht vom Staubkuchen und dem eingelagerten Staub erforderlich. Diese Reinigung erfolgt üblicherweise durch einen Druckstoß in Gegenrichtung zur Strömungsrichtung während des Filterbetriebs.

Für bestimmte Einsatzzwecke von Filtern können die Filterschichten mit elektrisch leitfähigen Substanzen ausgerüstet werden. So sind beispielsweise für die Abscheidung von explosiven Stäuben nur antistatische und geerdete Filterelemente zulässig. Dadurch wird vermieden, daß elektrostatisch erzeugte Funken die Auslösung einer Explosion bewirken können. Die an sich elektrostatisch nicht leitfähigen Bestandteile der Filter sind folglich mit einer antistatischen Ausrüstung auszustatten. Bekannt ist beispielsweise, daß die Filterschicht mit einer Metallschicht oder auch Schicht aus leitfähigen Rußpartikeln versehen wird. Die Metallschicht kann beispielsweise durch Bedampfen der Filterschicht aufgebracht werden. Schon bei sehr dünnen Schichten wird hier der geforderte Oberflächenwiderstand erreicht. Die Porosität und die Luftdurchlässigkeit des Filtermediums werden kaum beeinflußt. Die Metallschichten sind jedoch sehr unbeständig gegenüber Abriebbeanspruchungen oder gegenüber der Einwirkung von Chemikalien. Sie sind deshalb in ihrem Einsatzbereich stark eingeschränkt. Hinzu kommt, daß bei den üblichen Bedampfungsverfahren nur die Oberfläche des Filtermediums mit einem metallischen Überzug versehen wird, so daß der Durchgangswiderstand bei dichten beziehungsweise dickeren Materialien zu hohe Werte annimmt.

Die vollflächige Imprägnierung des Filters mit leitfähigem Ruß und einem geeigneten Bindemittelsystem hat zwar im Vergleich zur Metallschicht den Vorteil einer guten Abrieb- und Chemikalienbeständigkeit, jedoch werden bei dieser Ausrüstung die Filtereigenschaften wie zum Beispiel Luftdurchlässigkeit oder Porosität des Filtermediums signifikant vermindert. Dadurch wird die Gebrauchstüchtigkeit des Filters für die Entstaubung eingeschränkt. Der Energieverbrauch für den Betrieb des Filters wird erhöht und die Lebensdauer verringert. Außerdem erhöht diese Ausrüstung bei vielen Stäuben die Haftung zum Filtermedium in einem Ausmaß, daß sich die Regenerierfähigkeit negativ ändert oder gar nicht mehr gegeben ist.

### Darstellung der Erfindung

Der Erfindung liegt die Aufgabe zugrunde, einen Filter aus Vliesstoff, Papier oder dergleichen für gasförmige Medien herzustellen, der eine hohe Gebrauchstüchtigkeit hat. Die Abriebbeanspruchung soll möglichst gering sein und die Chemikalienbeständigkeit möglichst hoch. Der Filter soll regenerierfähig sein und eine lange Lebensdauer haben. Außerdem wird eine hohe Porosität und hohe Luftdurchlässigkeit angestrebt.

Vorrangiges Ziel ist die antistatische Ausrüstung, damit der Filter auch bei der Reinigung von Gasen mit explosiven Stäuben einsetzbar ist.

Die Lösung der gestellten Aufgabe wird bei einem Filter mit den Kennzeichen des Anspruchs 1 erreicht. Als Filterschicht wird bevorzugt ein Filter aus Vliesstoff verwendet. Dieser Filter wird mit einer elektrisch leitfähigen Schicht aus einer leitfähigen Substanz aus pulverisierbaren Materialien, insbesondere aus elektrisch leitfähigem Ruß und/oder pulverförmigen Metallpartikeln oder auch anderen pulverisierbaren geeigneten Materialien, versehen, wobei die Partikel mit Hilfe von Bindemitteln auf den Filterfasern fixiert sind und bei dem die Schicht netzartig auf der Filteroberfläche aufgebracht ist. Anstelle der bisher üblichen geschlossenen Schicht der elektrisch leitfähigen Substanz wird eine mit Unterbrechungen versehene Schicht in netz- oder siebartiger Ausbildung auf die Vliesstoffschicht aufgetragen. Die Durchbrechungen der Schicht ermöglichen die Beibehaltung einer zufriedenstellenden Luftdurchlässigkeit bei gleichzeitig guter antistatischer Ausrüstung. Die bekannten Vorteile einer hohen Abriebfestigkeit, Chemikalienbeständigkeit und Regenerierbarkeit des Filters werden beibehalten. Um den Anforderungen an einen niedrigen Oberflächenwiderstand zu genügen, ist das Muster der leitfähigen Schicht in beiden Dimensionen auf der Filterschicht durchgehend aufgetragen. Zusätzlich hierzu ist es erforderlich, daß die leitfähige Mischung ausreichend tief in die Filterschicht eingebracht wird, damit auch durch die Filterschicht der Transport elektrischer Ladungen möglich ist. Hier wird in weiterer Ausgestaltung der Erfindung die Ruß- oder Metallpartikelschicht in die Filterschicht in eine Tiefe von mindestens 50 % der Filterschichtstärke eingebracht. Je nach Anwendungszweck und auch in Abhängigkeit von der Filterschichtdicke werden die Partikel in einer geringeren oder größeren Tiefe in die Filterschicht eingelagert. Gegebenenfalls wird eine 100 %ige Durchdringung vorgesehen.

In vielen Anwendungsfällen ist der Einsatz von Rußstaub günstig. Dabei beträgt der Anteil der Rußpartikel bezogen auf das Bindemittel 10 bis 80 %, vorzugsweise 30 bis 50 %. In Versuchen zeigte sich, daß bei diesen Anteilen eine ausreichende antistatische Wirkung erreicht wird. Besonders gute Ergebnisse wurden bei einem Anteil der Rußpartikel von 33,5 % erzielt.

Die mittlere Primärteilchengröße der Rußpartikel beträgt 15 bis 30 nm. Diese Feinheit der Rußpartikel ermöglicht ein gutes Eindringen der Partikel in die Filterschicht und später eine gute elektrische Leitfähigkeit.

Bei der Verwendung von Metallpartikeln ergeben sich gegenüber Rußpartikeln geringfügige Unterschiede. So wird auch der Anteil der Metallpartikel, bezogen auf das Bindemittel, zwischen 20 und 99 % gewählt, vorzugsweise beträgt der Anteil 70-90%. Die mittlere Primärteilchengröße der Metallpartikel ist 0,5-20 µm, vorzugsweise 1-5 µm.

Als geeignete Metallpartikel haben sich Pulver aus Kupfer, Zink, Aluminium und/oder Silber erwiesen. Die Auswahl des geeigneten Metalls erfolgt im Hinblick auf den Einsatzbereich der Filter.

Als Bindemittel werden Polyvinylacetate, Polyvinylfluoride, Polyurethane, Polyacrylate oder Butadiencopolymerisate eingesetzt. Die Bindemittel sollen eine gute Verbindung zwischen den Partikeln und den Filterfasern ergeben.

Obwohl Rußpartikel insbesondere aus Kostengründen sich als besonders günstig erwiesen haben und Metallpartikel in erster Linie für Sonderfälle in Frage kommen, ist auch die Anwendung von leitfähigen organischen Substanzen im Rahmen des Erfindungsgedankens vorgesehen. Hier sind insbesondere elektrisch leitfähige Polymere aus Polyacetylen, Polyphenylen, Polythiophen oder Polypyrrol zu nennen.

Schließlich ist es auch möglich, die elektrisch leitfähige Substanz als eine Mischung aus Ruß, Metall und/oder organischen Partikeln mit einem geeigneten Bindemittel herzustellen.

Je geringer die netzförmige Oberflächenbedeckung mit der leitfähigen Schicht ist, um so größer ist naturgemäß die Luftdruchlässigkeit. Die elektrische Wirkung verringert sich allerdings. In Versuchen hat sich gezeigt, daß bei Einsatz von Rußpartikeln es günstig ist, wenn die netzförmige Oberflächenbedeckung mit der leitfähigen Rußschicht 25 bis 70 % der Filteroberfläche beträgt. Bei Verwendung von Metallpulverschichten kann die netzförmige Oberflächenbedeckung mit der leitfähigen Metallpulverschicht geringer sein, und sie liegt im Bereich zwischen 5 und 70 % der Filteroberfläche.

Es ist für die meisten Anwendungszwecke ausreichend, wenn der Festanteil der Substanz auf der Filteroberfläche 1 bis 15 g/m², vorzugsweise 2 bis 5 g/m² beträgt. Diese Werte beziehen sich auf den Einsatz von Rußpartikeln. Die Verwendung von Metallpartikeln beziehungsweise die zusätzliche Verwendung von Metallpartikeln verschiebt den Festanteil der Substanz in Richtung der geringeren Werte.

In der Regel ist es ausreichend, wenn die Filterschicht einseitig mit der leitfähigen Substanz beschichtet wird. Wie bereits weiter oben ausgeführt, kommt dabei der Durchdringung der Filterschicht mit den Partikeln eine wichtige Rolle zu. Es ist aber auch möglich, den Filter beidseitig mit der leitfähigen Schicht zu beaufschlagen. Hierdurch findet eine sichere Verknüpfung der Schichten miteinander statt. In wenigen Fällen ist es auch möglich, die beidseitigen leitfähigen Schichten deckungsgleich aufzutragen. Dadurch wird bei größtmöglicher Leitfähigkeit ein höchstmöglicher Luftdurchsatz erzielt.

Die Luftdurchlässigkeit durch den Filter wird von verschiedenen Faktoren bestimmt. Sie ist jedoch in jedem Fall besser als bei ganzseitiger Beschichtung des Filters. Um dem Erfindungsgedanken genügend Raum zu geben, wird bezogen auf den ganzseitig beschichteten Filter eine Verbesserung der Luftdurchlässigkeit von mindestens 15 % angestrebt.

### Ausführung der Erfindung

Ein Filter aus einem Vliesstoff wird im Siebdruckverfahren mit einer Paste bedruckt, die aus einem Rußanteil von 33,5 %, einem Bindemittel aus Acrylat von 52 % und einem Verdicker aus Acrylsäureester von rund 12 % besteht. Dieser Feststoffanteil wird zur Herstellung einer 10 %igen Lösung durch Lösen in Wasser verdünnt. Die Vliesstoffschicht besteht aus 100 % Polyesterfasern.

Die Durchdringung der Vliesschicht beträgt 85 %. Der erzielte Widerstandswert des Filters ist kleiner als 10⁸ Ω. Die Oberflächenbedeckung mit der leitfähigen Rußschicht beträgt 43 %. Die Luftdurchlässigkeit ist 330 m³/m²/h gemessen bei 200 Pa Druckdifferenz nach DIN 53887. Wird derselbe Vliesstoff vollflächig mit der leitfähigen Mischung ausgerüstet, sinkt der Wert der Luftdurchlässigkeit auf 270 m³/m²/h. Insgesamt wurde somit eine Verbesserung der Luftdurchlässigkeit von 22 %, bezogen auf den flächigen Druck, erreicht.

## Patentansprüche

1. Filter aus Vliesstoff, Papier oder dergleichen für gasförmige Medien mit einer elektrisch leitfähigen Schicht aus einer leitfähigen Substanz aus pulverisierbaren Materialien, insbesondere aus elektrisch leitfähigen Ruß- und/oder pulverförmigen Metallpartikeln oder anderen pulverisierten Materialien, wobei die Ruß- oder Metallpartikel mit Hilfe von Bindemitteln auf den Filterfasern fixiert sind und bei dem die leitfähige Schicht netzartig auf der Filterschicht aufgebracht ist.

2. Filter nach Anspruch 1, dadurch gekennzeichnet, daß die Ruß- oder Metallpartikel die Filterschicht in einer Tiefe von mindestens 50 % der Filterschichtstärke durchdringen.

3. Filter nach Anspruch 1 oder 2, dadurch gekennzeichnet, daß der Anteil der Rußpartikel, bezogen auf das Bindemittel, 10 bis 80 %, vorzugsweise 30 bis 50 % beträgt.

4. Filter nach einem der Ansprüche 1 bis 3, dadurch gekennzeichnet, daß der Anteil der Rußpartikel 33,5 % ist.

5. Filter nach einem der Ansprüche 1 bis 4, dadurch gekennzeichnet, daß die mittlere Primärteilchengröße der Rußpartikel 15 - 30 nm beträgt.

6. Filter nach einem der Ansprüche 1 bis 6, dadurch gekennzeichnet, daß der Anteil der Metallpartikel, bezogen auf das Bindemittel, 20 - 99 %, vorzugsweise 70-90%, beträgt.

7. Filter nach Anspruch 6, dadurch gekennzeichnet, daß die mittlere Primärteilchengröße der Metallpartikel 0,5-20 µm, vorzugsweise 1-5 µm ist.

8. Filter nach Anspruch 6 oder 7, dadurch gekennzeichnet, daß als Metallpartikel Pulver aus Kupfer, Zink, Aluminium und/oder Silber eingesetzt werden.

9. Filter nach einem der Ansprüche 1 bis 8, dadurch gekennzeichnet, daß als Bindemittel Polyvinylacetate, Polyvinylchloride, Polyurethane, Polyacrylate oder Butadiencopolymerisate eingesetzt werden.

10. Filter nach einem der Ansprüche 1 bis 9, dadurch gekennzeichnet, daß leitfähige organische Substanzen mit Bindemittel verwendet werden.

11. Filter nach Anspruch 10, dadurch gekennzeichnet, daß die organischen Substanzen elektrisch leitfähige Polymere aus Polyacetylen, Polyphenylen, Polythiophen oder Polypyrrol sind.

12. Filter nach einem der Ansprüche 1 bis 11, dadurch gekennzeichnet, daß die elektrisch leitfähige Substanz eine Mischung aus Ruß-, Metall- und organischen Partikeln mit einem Bindemittel ist.

13. Filter nach einem der Ansprüche 1 bis 12, dadurch gekennzeichnet, daß die netzförmige Oberflächenbedeckung mit der leitfähigen Rußschicht 25 - 70 % der Filteroberfläche beträgt.

14. Filter nach einem der Ansprüche 1 bis 13, dadurch gekennzeichnet, daß die netzförmige Oberflächenbedeckung mit der leitfähigen Metallpulverschicht 5 - 70 % der Filteroberfläche beträgt.

15. Filter nach einem der Ansprüche 1 bis 14, dadurch gekennzeichnet, daß der Festanteil der Substanz auf der Filterschicht 1 -15 g/m², vorzugsweise 2 - 5 g/m², beträgt.

16. Filter nach einem der Ansprüche 1 bis 15, dadurch gekennzeichnet, daß der Filter beidseitig mit der leitfähigen Schicht beaufschlagt ist.

17. Filter nach einem der Ansprüche 1 bis 16, dadurch gekennzeichnet, daß die beidseitigen leitfähigen Schichten deckungsgleich sind.

18. Filter nach einem der Ansprüche 1 bis 17, dadurch gekennzeichnet, daß die Luftdurchlässigkeit des Filters, bezogen auf einen ganzseitig beschichteten Filter, um mindestens 15 % erhöht ist.
